# EUROPEAN PATENT SPECIFICATION

(11) **EP 3 792 537 B1**
(45) Date of publication and mention of the grant of the patent: **15.02.2023**
(21) Application number: 20195354.4
(22) Date of filing: 09.09.2020
(51) Int. Cl.: F16K 31/34, F16K 1/44

(54) **DEVICE FOR SECURING AN INTERRUPTED WATER SUPPLY**
VORRICHTUNG ZUR SICHERUNG EINER UNTERBROCHENEN WASSERVERSORGUNG
DISPOSITIF POUR SÉCURISER UNE ALIMENTATION EN EAU INTERROMPUE

(30) Priority: 10.09.2019 BE 201905596
(43) Date of publication of application: 17.03.2021
(73) Proprietor: D&O Tecnics, besloten vennootschap met beperkte aansprakelijkheid, 9310 Meldert (BE)
(72) Inventor: VAN DE MOORTELE, Guido, 2050 Antwerpen (BE); DENOO, Bernard, 9310 Meldert (BE)
(74) Representative: Donné, Eddy

(56) References cited:
- WO-A1-2012/118253
- US-A- 2 619 108

## Description

The present invention relates to a device for securing an interrupted water supply.

In particular, the invention is intended for application on an interrupted water supply, whereby a water take-off is not directly connected to the mains water supply.

Such interrupted water supplies are applied in toilet cisterns, in industrial dish washers, for filling swimming pools, ice machines, steamers, solar boilers, dentist practices and the like.

In its simplest form an interrupted water supply consists of a storage tank in which a desired quantity of water is collected, as in a toilet cistern. The cistern is provided with a supply tap from which mains water flows with which the cistern is filled.

The cistern is provided with a float that rises with the rising level of the water. As soon as the desired water level has been reached, the float closes the supply tap by means of a lever to prevent the cistern from overflowing. After the cistern has been used, the water level drops to zero again and the cistern must be refilled.

Refilling is automatic because the float is at its lowest position again, whereby the supply tap is open again and water is added until the desired water level has been reached.

WO2012118253 discloses a water level control apparatus with two valves in series, each valve actuated by a respective float.

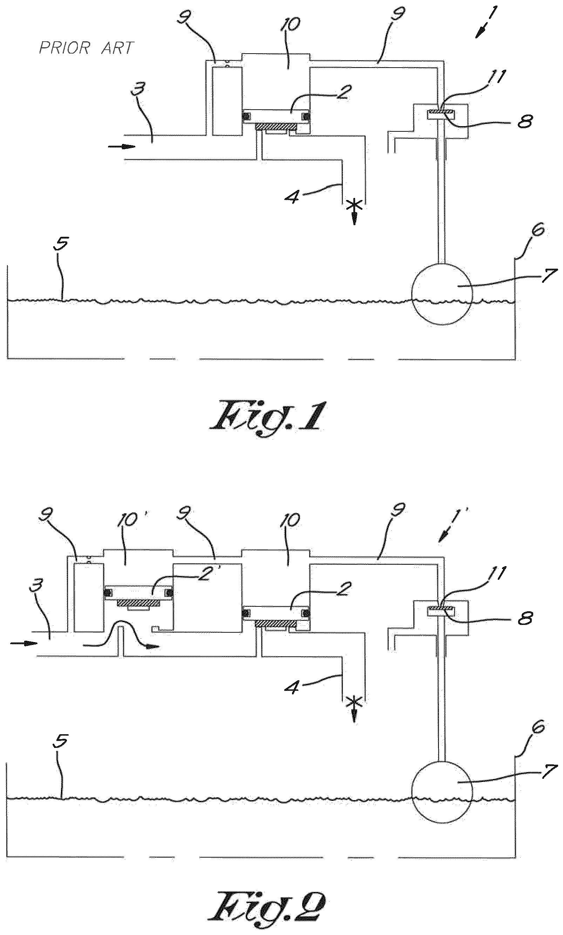

Furthermore, figure 2 of the present application discloses a device according to the preamble of claim 1.

A problem occurs when the supply tap, for whatever reason, does not shut off properly and the water continues to flow, even though there is enough water in the cistern. The consequence is the cistern overflowing and the room where the cistern is located flooding, resulting in water damage.

This problem also occurs in other applications whereby water is collected in a storage tank which provides an atmospheric interruption and from which water is taken for all kinds of applications such as for industrial dish washers, for filling swimming pools, ice machines, steamers, solar boilers, for dentist practices and countless other applications.

The purpose of the present invention is to provide a solution to the aforementioned and other disadvantages, by providing a device which offers double security against the unintentional overflowing of a storage tank.

For this purpose, mounting two hydraulically controlled shutoff valves in series with each other on the water supply pipe will not suffice. The shutoff valve nearest to the exit or nozzle of the supply pipe will shut off before the shutoff valve furthest from the exit and this because the pressure difference between both sides of the shutoff valve is greater than at the shutoff valve furthest from the nozzle.

After the shutoff valve nearest to the nozzle is closed, there will no longer be a pressure difference between both sides of the shutoff valve furthest from the exit, such that said furthest shutoff valve no longer closes. In the case that for example a small leak occurs on the seal of the nearest valve, the furthest shutoff valve cannot remedy this because it is not shut and leakage water continues to flow into the reservoir.

The phrasing of furthest and nearest shutoff valve relative to the nozzle does not refer to the geometric distance to the nozzle, but to the position downstream on the mains water supply pipe until the nozzle is reached.

The solution to this problem consists in using means which ensure that both the nearest shutoff valve and the furthest shutoff valve always go to their closed position when controlled by the control element, i.e. a float that operates a control valve.

To this end the invention relates to a device for securing an interrupted water supply, consisting of at least two hydraulic shutoff valves on a supply pipe adapted to supply water to a storage tank and adapted to fill said tank from a nozzle and of a branch pipe on the supply pipe which branches off water upstream from both shutoff valves and first supplies said water to the pressure chamber of the shutoff valve located furthest from the nozzle, and subsequently to the pressure chamber of the shutoff valve located nearest to the nozzle, and continues further to a nozzle which is adapted to end in the storage tank, and of a float adapted to be placed in the storage tank and which operates a control valve, which shuts off the mouth of the branch pipe when the water level in the storage tank is high enough, characterised in that
(a) - the shutoff valve located nearer from the nozzle is not provided with a support spring and the shutoff valve located furthest from the nozzle is provided with a support spring which works in the close direction and can at least overcome the displacement resistance of the shutoff valve, such that said furthest shutoff valve will in any case close, and under normal circumstances, will close earlier than the nearest shutoff valve; or
(b) - the shutoff valve located nearest to the nozzle is allowed to close later by ensuring that the operation of the control pressure on the nearest shutoff valve is delayed, by means of a constriction in the branch pipe upstream from the pressure chamber of the nearest shutoff valve, said constriction being mounted in series with a second constriction in the branch pipe upstream from the pressure chamber of the furthest shutoff valve; or
   - a combination of (a) and (b).

In a preferred embodiment, the two shutoff valves on the main pipe are incorporated in a housing, under which the movable float can be connected, and this on the level of the furthest or the nearest shutoff valve, whereby the float is adapted to close the control valve as soon as the water has reached the desired level in the storage tank.

The control valve shuts off the small branch pipe, which is branched off upstream from the two shutoff valves from the main pipe which supplies the water to the storage tank and ends in a nozzle at the top in the storage tank. The branch pipe transports water via a constriction to the pressure chamber of the shutoff valve located furthest from the exit and from there further to the pressure chamber of the second shutoff valve, and from there to the mouth of the branch pipe which can be shut off by the control valve of the float.

This ensures that the water in the branch pipe, if the control valve is closed, will increase the pressure in the pressure chambers of both shutoff valves and can always close both shutoff valves, such that the supply of water to the storage tank from the main pipe will always be completely shut off, also if one of both shutoff valves were to be defective.

The shutoff valve located furthest from the nozzle, is equipped with a support spring which supports the shutoff valve to move in the close direction to the closed condition. Between the branch point of the branch pipe and the pressure chamber of the shutoff valve located furthest from the nozzle, a first constriction is located in the branch pipe which has a delaying effect on the pressure build-up downstream from the first constriction. Between the pressure chamber of the shutoff valve located furthest from the nozzle and the pressure chamber of the shutoff valve located nearest to the nozzle, a second constriction is located in the branch pipe, which also has a delaying effect on the pressure build-up downstream from the second constriction, i.e. in the pressure chamber of the shutoff valve located nearest to the nozzle.

The force of the support spring and the diameter of both constrictions have been chosen thus that they always ensure both shutoff valves are completely closed when the control valve shuts off the branch flow through the branch pipe.

In the most preferred embodiment the first constriction is formed by the central mouth of the furthest shutoff valve in which a central pin moves. The central mouth moves with the shutoff valve located furthest from the nozzle and the space between the clamping edge and the central pin forms the first constriction where the water branched off in the branch pipe must go through to get to the furthest shutoff valve. When moving the central mouth along the clamping edge, the pin is scraped, such that the constriction and the shutoff valve are self-cleaning.

In the most preferred embodiment the second constriction is formed by a narrowing in the supply pipe to the pressure chamber of the shutoff valve located nearest to the nozzle.

Preferably the first and the second constriction lie within the housing comprising the two shutoff valves.

With the intention of better showing the characteristics of the invention, a preferred embodiment of a device for securing an interrupted water supply according to the invention is described hereinafter, by way of an example without any limiting nature, with reference to the accompanying drawings wherein:
figure 1 schematically and in cross-section shows a device for securing an interrupted water supply according to the state of the art;
figure 2 schematically shows a faulty device according to figure 1 provided with two shutoff valves.
figure 3 schematically shows a device according to the invention provided with two shutoff valves in closed condition;
figure 4 shows figure 3 but now in opened condition;
figure 5 shows a perspective view of the device according to the invention provided with a float;
figure 6 shows a perspective view of a cutaway cross-section according to line VI-VI in figure 5;
figure 7 shows a detail indicated with F7 on figure 6 on a larger scale.

Figure 1 shows a device 1 as known according to the state of the art to secure an interrupted water supply. The device 1 consists of a hydraulically controlled shutoff valve 2 on a supply pipe 3 of water to an exit 4, from which water 5 can flow into a storage tank 6. The storage tank is provided with a float 7 which is connected to a shutoff valve 8 with which a branch pipe 9 can be shut off, said branch pipe 9 branching off from the supply pipe 3 upstream from the hydraulically controlled shutoff valve 2 and supplying water to the pressure chamber 10 of the shutoff valve 2 and further to a mouth 11 which in case of sufficient water supply is shut off by the shutoff valve 8 connected to the float 7.

Figure 2 shows a variant 1' of figure 1, whereby in this case two hydraulically controlled shutoff valves 2, 2' are mounted in series on the supply pipe 3 and their respective pressure chambers 10, 10' are connected by the branch pipe 9, but whereby functionally no double security is obtained, because both shutoff valves 2, 2' are not necessarily closed when shutting off the mouth 11 by the shutoff valve 8.

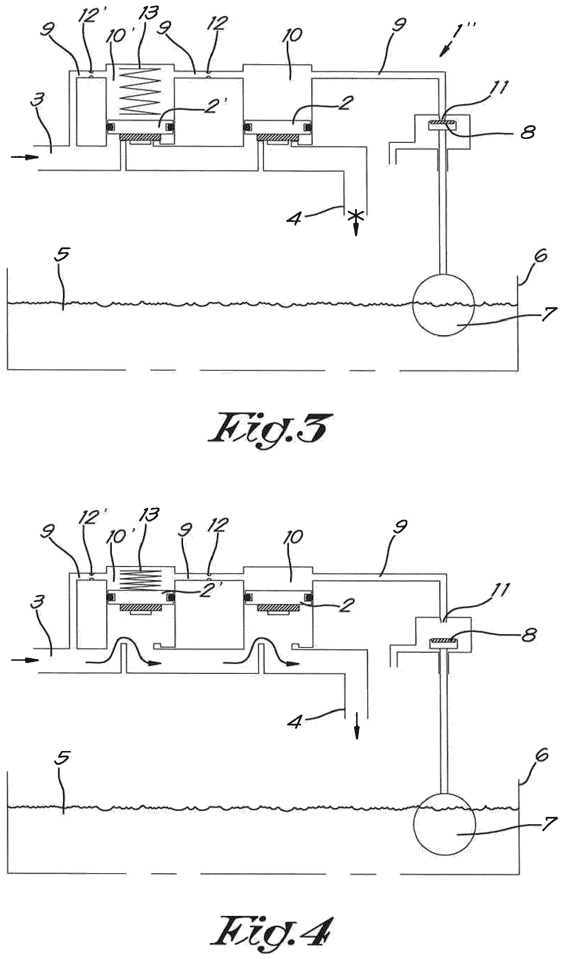

Figure 3 shows a variant 1" of figure 2 but now according to the invention, whereby in this case upstream, before every shutoff valve 2, 2', a constriction 12, 12' is provided in the branch pipe 9 which leads to the pressure chambers 10, 10' of the shutoff valves 2, 2', and whereby the pressure chamber 10' of the shutoff valve 2' located furthest from the nozzle 4 of the supply pipe 3, is provided with a support spring 13 that helps to close said shutoff valve 2'.

In this case the mouth 11 of the branch pipe 9 is shut off by the shutoff valve 8 and both shutoff valves 2, 2' are also closed.

Figure 4 shows figure 3 but now in open condition, whereby the shutoff valve 8 which is connected to the float 7, does not shut off the mouth 11 of the branch pipe 9, as the level of the water 5 in the storage tank 6 has become too low. Both shutoff valves 2, 2' are now in opened condition, such that the water of the supply pipe 3 can continue flowing to the nozzle 4 and the storage tank 6 is refilled.

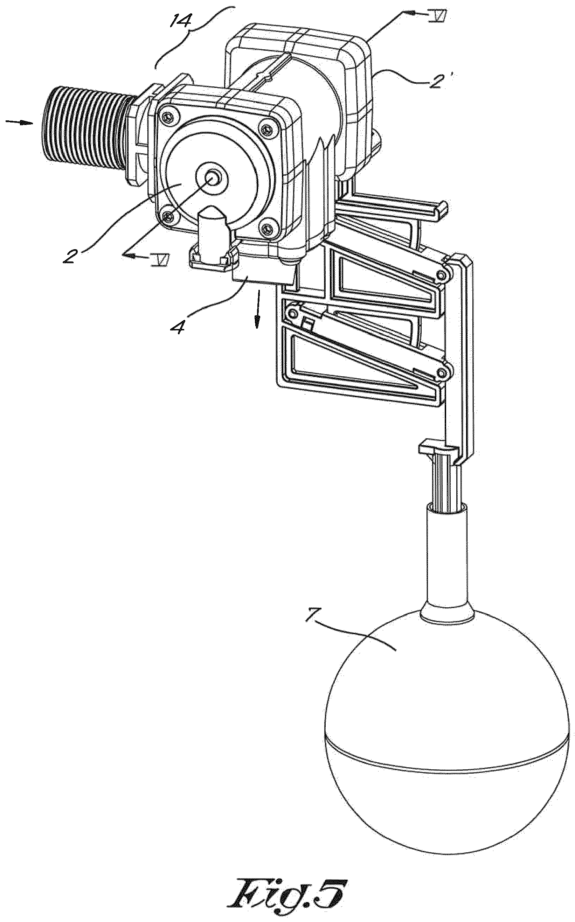

Figure 5 shows a housing 14 provided with two shutoff valves and two constrictions according to the invention, whereby the housing is provided at the bottom with a nozzle 4 from which water can flow to an underlying storage tank 6. A movable float 7 is connected on one side of the housing 14, which when the storage tank 6 is filled up to the desired level, will shut off the further water supply from the nozzle 4.

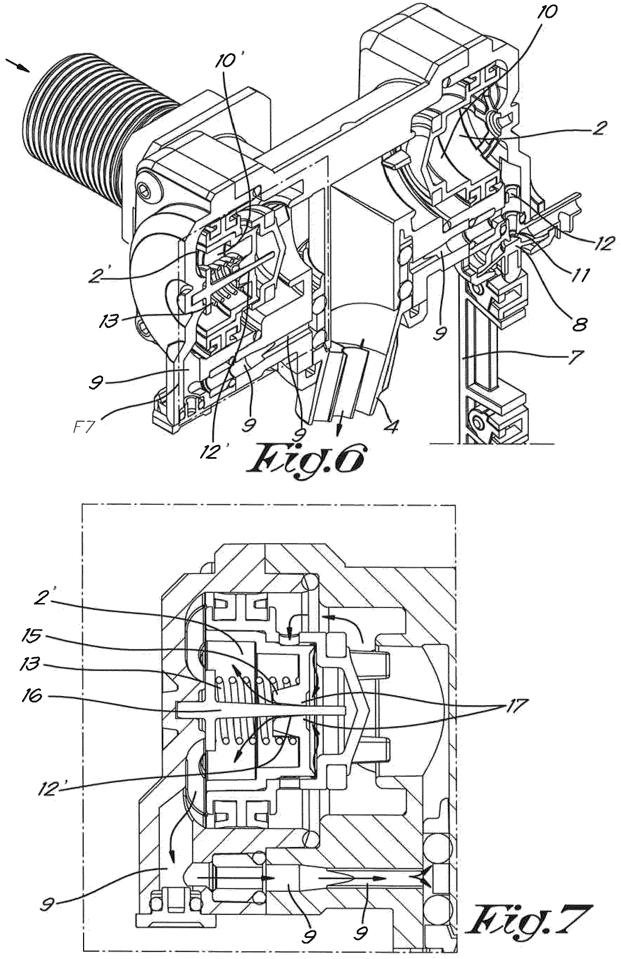

Figure 6 shows a perspective view of a vertical cross-section through the housing 14, such that a cut-away is shown of the two present shutoff valves 2, 2'. Only the shutoff valve 2' is provided with a support spring 13, which stimulates the motion of the shutoff valve 2' to the closed position. The branch pipe 9 runs from the water supply 3 to the pressure chamber 10' of the shutoff valve 2' located and being furthest from the nozzle 4 of the supply pipe 3, upstream from the pressure chamber 10', provided with a first constriction 12'. The branch pipe 9 further connects the pressure chamber 10' of the furthest shutoff valve 2' to the pressure chamber 10 of the shutoff valve 2 nearest to the nozzle 4 and is provided with a second constriction 12 upstream from the nearest shutoff valve 2. The branch pipe 9 further connects said nearest pressure chamber 10 to the mouth 11 of the branch pipe 9, which can be shut off by the shutoff valve 8 when the float 7 rises. Preferably the nozzle 4 is mounted rotatably and directionally on the housing 14 of the two shutoff valves, such that the water that comes out does not end up directly on the float 7.

Figure 7 shows a detail on a larger scale indicated with F7 on figure 6, on which the support spring 13 is shown in more detail, as well as the central mouth 15 of the shutoff valve 2' in which a central pin 16 is located, said central pin 16 being scraped by the clamping edge 17 of the central mouth 15 when it moves, such that the shutoff valve 2' and the constriction are self-cleaning. The flow direction of the water from the branch pipe 9 is indicated with black arrows. The water enters in the top right on figure 7 and flows around the shutoff valve 2' to the central pin 16, through which the water seeps in through the constriction 12' in the pressure chamber of the shutoff valve 2' in which the pressure increases, and the furthest shutoff valve 2', also aided by the support spring 13, moves in the close direction. The water leaves the surroundings of the shutoff valve 2' in the bottom left, where it flows further into the cavities of the branch pipe 9 which runs around the drain pipe of the nozzle 4, to the nearest shutoff valve 2, whereby the water flows through a second constriction 12 before being guided into the pressure chamber of the shutoff valve 2 and also to the mouth 11 of the branch pipe (see figure 6).

The operation of the device 1" according to the invention is simple, automatic and as follows.

As long as the storage tank 6 is not filled with water 5, additional water is supplied from the supply pipe 3 and the two shutoff valves 2, 2' are opened, such that the water can continue flowing through the supply pipe 3 unhindered to the nozzle 4 and ends up in the storage tank 6.

As soon as the level of the storage tank 6 is high enough, the float 7 will rise together with the water surface, and thus also the shutoff valve 8 connected thereto which consequently will shut off the mouth 11 of the branch pipe 9. As a result the branch pipe 9 will be under the same pressure as the supply pipe 3, because the water in the branch pipe 9 can no longer flow away through the mouth 11.

The pressure will quickly build up from the branch point of the branch pipe up to the first constriction 12', where the reduced flow causes a delay of the pressure build-up in the pressure chamber 10' of the shutoff valve 2', located furthest from the nozzle 4. Aided by the support spring 13, the pressure building up in the pressure chamber 10' will, move the valve 2' to the closed position.

The pressure will build up further to the second constriction 12 in the branch pipe 9, where the reduced flow causes a delay of the pressure build-up in the pressure chamber 10 of the shutoff valve 2, which is located nearest to the nozzle 4. Said shutoff valve 2 is not provided with a support spring and under normal circumstances will close later than the furthest shutoff valve 2'.

In this way it is obtained that the shutoff valves will both close completely when the storage tank is full, and in doing so will both prevent that more water would be supplied from the supply pipe 3 resulting in the storage tank overflowing. The doubled shutoff valves provide much better security in this case because, even if one of the shutoff valves were to be defective, the other shutoff valve would still shut off the water supply, regardless of which of the two shutoff valves were to show a defect, such as for example a water leak.

Obviously, the diameter of the used constrictions may vary depending on the dimensions and properties of the used shutoff valves and of the used support spring. A combination of constrictions and support spring is always possible whereby the shutoff valve located furthest from the nozzle closes first and the shutoff valve located nearest to the nozzle closes later but briefly afterwards, such that in case of any interruption of the supply flow 3, the supply is always secured by two closed shutoff valves, such that the risk of the storage tank overflowing is strong reduced.

The present invention is by no means limited to the embodiments described as an example and shown in the figures, but a device for securing an interrupted water supply according to the invention can be realised in all kinds of forms and dimensions without departing from the scope of the invention, as is described in the following claims.

## Claims

1. Device (1") for securing an interrupted water supply (3), consisting of at least two hydraulic shutoff valves (2, 2') on a supply pipe (3) adapted to supply water (5) to a storage tank (6) and adapted to fill said tank from a nozzle (4), and of a branch pipe (9) on the supply pipe (3) which branches off water upstream from both shutoff valves (2, 2') and first supplies said water to the pressure chamber (10') of the shutoff valve (2') located furthest from the nozzle (4), and subsequently to the pressure chamber (10) of the shutoff valve (2) located nearest to the nozzle (4), and continues further to a nozzle (11) which is adapted to end in the storage tank (6), and of a float (7) adapted to be placed in the storage tank (6) and which operates a control valve (8), which shuts off the nozzle (11) of the branch pipe (9) when the water level in the storage tank (6) is high enough, **characterised in that**
(a) the shutoff valve (2) located nearer from the nozzle (4) is not provided with a support spring and the shutoff valve (2') located furthest from the nozzle (4) is provided with a support spring (13) which works in the close direction and can at least overcome the displacement resistance of the shutoff valve (2'), such that said furthest shutoff valve (2') will in any case close, and under normal circumstances, will close earlier than the nearest shutoff valve (2); or
(b) - the shutoff valve (2) located nearest to the nozzle (4) is allowed to close later by ensuring that the operation of the control pressure on the nearest shutoff valve (2) is delayed, by means of a constriction (12) in the branch pipe (9) upstream from the pressure chamber (10) of the nearest shutoff valve (2), said constriction (12) being mounted in series with a second constriction (12') in the branch pipe (9) upstream from the pressure chamber (10') of the furthest shutoff valve' (2'); or
- a combination of (a) and (b).

2. Device (1") according to claim 1, **characterised in that** the two shutoff valves (2, 2') on the main pipe (3) are incorporated in a housing (14), under which the movable float (7) can be connected, and this on the level of the furthest (2') or the nearest (2) shutoff valve, whereby the float (7) is adapted to close the control valve (8) as soon as the water (5) has reached the desired level in the storage tank (6).

3. Device (1") according to claim 1, **characterised in that** the force of the support spring (13) and the diameter of both constrictions (12, 12') are chosen thus, that they ensure that both shutoff valves (2, 2') are always completely closed when the control valve (8) shuts off the branch flow through the branch pipe (9).

4. Device (1") according to claim 1, **characterised in that** the first constriction (12') is formed by the space between the central mouth (15) of the furthest shutoff valve (2'), and the central pin (16) which moves in the central mouth (15), and around which the support spring (13) is wound.

5. Device according to claim 4, **characterised in that** when the furthest shutoff valve 2' moves, the central mouth (15) and the clamping edge (17) move scrapingly over the central pin (16), such that the constriction (12') and the shutoff valve (2') in which it is located are self-cleaning.

6. Device according to claim 1, **characterised in that** the second constriction (12) is formed by a narrowing in the supply pipe (9) to the pressure chamber (10) of the shutoff valve (2) located nearest to the nozzle (4).

7. Device according to claims 4 and 6, **characterised in that** the first (12') and the second constriction (12) lie within the housing (14) comprising the two shutoff valves (2, 2').

8. Device according to claim 2, **characterised in that** the nozzle (4) is rotatably and directionally mounted on the housing (14) of the two shutoff valves (2, 2').

## Patentansprüche

1. Vorrichtung (1") zum Sichern einer unterbrochenen Wasserversorgung (3), bestehend aus mindestens zwei hydraulischen Absperrventilen (2, 2') auf einem Versorgungsrohr (3), das dazu ausgelegt ist, Wasser (5) einem Lagertank (6) zuzuführen und dazu ausgelegt ist, den Tank aus einer Düse (4) zu füllen, und aus einem Abzweigrohr (9) auf dem Versorgungsrohr (3), das von den beiden Absperrventilen (2, 2') stromaufwärts Wasser abzweigt und zuerst das Wasser der Druckkammer (10') des Absperrventils (2'), das am weitesten von der Düse (4) entfernt angeordnet ist, und anschließend der Druckkammer (10) des Absperrventils (2), das am nächsten zu der Düse (4) angeordnet ist, zuführt, und weiter zu einer Düse (11) führt, die dazu ausgelegt ist, in dem Lagertank (6) zu enden, und aus einem Schwimmer (7), der dazu ausgelegt ist, in dem Lagertank (6) platziert zu werden und der ein Steuerventil (8) betreibt, das die Düse (11) des Abzweigrohres (9) verschließt, wenn das Wasserniveau in dem Lagertank (6) hoch genug ist,
**dadurch gekennzeichnet, dass**
(a) das Absperrventil (2), das näher an der Düse (4) angeordnet ist, nicht mit einer Stützfeder versehen ist und das Absperrventil (2'), das am weitesten von der Düse (4) entfernt angeordnet ist, mit einer Stützfeder (13) versehen ist, die in der Schließrichtung arbeitet und mindestens den Verschiebewiderstand des Absperrventils (2') überwinden kann, sodass das am weitesten entfernte Absperrventil (2') in jedem Fall schließt und unter normalen Umständen früher als das nächstgelegene Absperrventil (2) schließt; oder
(b) -das Absperrventil (2), das am nächsten zu der Düse (4) angeordnet ist, später schließen kann, indem sichergestellt wird, dass der Betrieb des Steuerdrucks auf dem nächsten Absperrventil (2) mittels einer Verengung (12) in dem Abzweigrohr (9) stromaufwärts von der Druckkammer (10) des nächsten Absperrventils (2) verzögert wird, wobei die Verengung (12) in Reihe mit einer zweiten Verengung (12') in dem Abzweigrohr (9) stromaufwärts von der Druckkammer (10') des am weitesten entfernten Absperrventils' (2') montiert ist; oder
- eine Kombination von (a) und (b).

2. Vorrichtung (1") nach Anspruch 1, **dadurch gekennzeichnet, dass** die zwei Absperrventile (2, 2') an dem Hauptrohr (3) in ein Gehäuse (14) eingearbeitet sind, unter dem der bewegliche Schwimmer (7) verbunden werden kann, und dies auf dem Niveau des am weitesten entfernten (2') oder am nächsten gelegenen (2) Absperrventils, wobei der Schwimmer (7) dazu ausgelegt ist, das Steuerventil (8) zu schließen, sobald das Wasser (5) das gewünschte Niveau in dem Lagertank (6) erreicht hat.

3. Vorrichtung (1") nach Anspruch 1, **dadurch gekennzeichnet, dass** die Kraft der Stützfeder (13) und der Durchmesser beider Verengungen (12, 12') so gewählt werden, dass sie sicherstellen, dass beide Absperrventile (2,2') immer vollständig geschlossen sind, wenn das Steuerventil (8) den Abzweigdurchfluss durch das Abzweigungsrohr (9) absperrt.

4. Vorrichtung (1") nach Anspruch 1, **dadurch gekennzeichnet, dass** die erste Verengung (12') durch den Raum zwischen der zentralen Öffnung (15) des am weitesten entfernten Absperrventils (2') und dem zentralen Stift (16), der sich in der zentralen Öffnung (15) bewegt und um den die Stützfeder (13) gewickelt ist, gebildet wird.

5. Vorrichtung nach Anspruch 4, **dadurch gekennzeichnet, dass**, wenn sich das am weitesten entfernte Absperrventil 2' bewegt, sich die zentrale Öffnung (15) und die Klemmkante (17) abstreifend über den zentralen Stift (16) bewegen, so dass sich die Verengung (12') und das Absperrventil (2'), in dem sie sich befindet, selbstreinigen.

6. Vorrichtung nach Anspruch 1, **dadurch gekennzeichnet, dass** die zweite Verengung (12) durch eine Einengung in dem Versorgungsrohr (9) zu der Druckkammer (10) des Absperrventils (2), das am nächsten zur Düse (4) angeordnet ist, gebildet ist.

7. Vorrichtung nach Anspruch 4 und 6, **dadurch gekennzeichnet, dass** die erste (12') und die zweite Verengung (12) innerhalb des Gehäuses (14) liegen, das die zwei Absperrventile (2, 2') umfasst.

8. Vorrichtung nach Anspruch 2, **dadurch gekennzeichnet, dass** die Düse (4) drehbar und gerichtet an dem Gehäuse (14) der zwei Absperrventile (2, 2') montiert ist.

## Revendications

1. Dispositif (1") destiné à la fixation d'une alimentation en eau interrompue (3), constitué par au moins deux vannes d'arrêt hydrauliques (2, 2') sur un tuyau d'alimentation (3) conçu pour alimenter en eau (5) un réservoir de stockage (6) et conçu pour remplir ledit réservoir à partir d'une buse (4), et par un tuyau de dérivation (9) sur le tuyau d'alimentation (3) qui dérive l'eau en amont des deux vannes d'arrêt (2, 2') et fournit ladite eau d'abord à la chambre de pression (10') de la vanne d'arrêt (2') située le plus loin de la buse (4), et par la suite la chambre de pression (10) de la vanne d'arrêt (2) située le plus près de la buse (4), et qui se prolonge jusqu'à une buse (11) qui est conçue pour aboutir dans le réservoir de stockage (6), et par un flotteur (7) conçu pour être placé dans le réservoir de stockage (6) et qui actionne une soupape de commande (8), qui met la buse (11) du tuyau de dérivation (9) hors circuit lorsque le niveau d'eau dans le réservoir de stockage (6) est suffisamment élevé, **caractérisé**
a) **en ce que** la vanne d'arrêt (2) située plus près de la buse (4) n'est pas munie d'un ressort de support et la vanne d'arrêt (2') située le plus loin de la buse (4) est munie d'un ressort de support (13) qui travaille dans la direction de fermeture et qui peut au moins surmonter la résistance au déplacement de la vanne d'arrêt (2'), d'une manière telle que ladite vanne d'arrêt la plus éloignée (2') se fermera de toute façon, et dans des circonstances normales, se fermera plus tôt que la vanne d'arrêt la plus proche (2) ; ou
b) **en ce qu'**on laisse la vanne d'arrêt (2) située le plus près de la buse (4) se fermer plus tard en s'assurant que l'activation de la pression de commande sur la vanne d'arrêt la plus proche (2) est retardée, au moyen d'un étranglement (12) dans le tuyau de dérivation (9) en amont de la chambre de pression (10) de la vanne d'arrêt la plus proche (2), ledit étranglement (12) étant monté en série avec un second étranglement (12') dans le tuyau de dérivation (9) en amont de la chambre de pression (10') de la vanne d'arrêt la plus éloignée (2') ; ou
- par une combinaison de (a) et (b).

2. Dispositif (1") selon la revendication 1, **caractérisé en ce que** les deux vannes d'arrêt (2, 2') du tuyau principal (3) sont incorporées dans un boîtier (14), en dessous duquel le flotteur mobile (7) peut être raccordé, et ceci au niveau de la vanne d'arrêt la plus éloignée (2') ou la plus proche (2) ; dans lequel le flotteur (7) est conçu pour fermer la soupape de commande (8) dès que l'eau (5) a atteint le niveau désiré dans le réservoir de stockage (6).

3. Dispositif (1 ") selon la revendication 1, **caractérisé en ce que** la force du ressort de support (13) et le diamètre des deux étranglements (12, 12') sont sélectionnés d'une manière telle qu'ils garantissent le fait que les deux vannes d'arrêt (2, 2') sont toujours complètement fermées lorsque la soupape de commande (8) coupe l'écoulement de dérivation à travers le tuyau de dérivation (9).

4. Dispositif (1") selon la revendication 1, **caractérisé en ce que** le premier étranglement (12') est réalisé par l'espace ménagé entre l'orifice central (15) de la vanne d'arrêt la plus éloignée (2'), et par la broche centrale (16) qui se déplace dans l'orifice central (15), et autour de laquelle le ressort de support (13) est enroulé.

5. Dispositif selon la revendication 4, **caractérisé en ce que**, lorsque la vanne d'arrêt la plus éloignée (2') se déplace, l'orifice central (15) et le bord de serrage (17) se déplacent par frottement par-dessus la broche centrale (16), d'une manière telle que l'étranglement (12') et la vanne d'arrêt (2') dans laquelle il est situé se nettoient de manière automatique.

6. Dispositif selon la revendication 1, **caractérisé en ce que** le second étranglement (12) est réalisé par un rétrécissement dans le tuyau d'alimentation (9) en direction de la chambre de pression (10) de la vanne d'arrêt (2) qui est située le plus près de la buse (4).

7. Dispositif selon les revendications 4 et 6, **caractérisé en ce que** le premier étranglement (12') et le second étranglement (12) sont situés au sein du boîtier (14) qui comprend les deux vannes d'arrêt (2, 2').

8. Dispositif selon la revendication 2, **caractérisé en ce que** la buse (4) est montée en rotation et de manière directionnelle sur le boîtier (14) des deux vannes d'arrêt (2, 2').
